# DEMANDE DE BREVET EUROPEEN

(11) **EP 2 982 497 A1**
(43) Date de publication de la demande: **10.02.2016**
(21) Numéro de dépôt: 15179800.6
(22) Date de dépôt: 05.08.2015
(51) Int. Cl.: B29C 70/56, B29C 70/22, F21S 4/00

(54) **PROCÉDÉ DE FABRICATION D'OBJETS LUMINEUX SURFACIQUES OU VOLUMIQUES**

(30) Priorité: 06.08.2014 FR 1457638
(71) Demandeur: ADS Design, 84120 Pertuis (FR)
(72) Inventeur: NUNZIATO, Yves, 13840 ROGNES (FR); BUCHIN, Lise, 13840 ROGNES (FR)
(74) Mandataire: Roman, Alexis

(57) **Abrégé**

L'invention a pour objet un procédé de fabrication d'un objet lumineux (10) surfacique ou volumique, lequel objet comprend une structure rigide (16) et un dispositif lumineux (15), lequel procédé comporte les étapes consistant à :
- enrober des fibres de résine et rassembler lesdites fibres enrobées en au moins un faisceau,
- tisser le faisceau (22) sur un dispositif tendeur de manière à délimiter la structure (16) et sécher la résine pour durcir ladite structure (16),
- associer le dispositif lumineux (15) et la structure (16),

**et se caractérisant par le fait que** ledit procédé comprend en outre les étapes consistant à :
- tisser un faisceau de fibres (16a) sur le dispositif tendeur de manière à former une première couche de la structure (16),
- placer le dispositif lumineux (15) sur cette première couche de fibres (16a),
- tisser un faisceau de fibres (16b) sur le dispositif tendeur de manière à former une seconde couche de la structure (16), lequel second faisceau est tissé au dessus du dispositif lumineux (15), de sorte que ce dernier soit enserré entre les deux couches de fibres (16a, 16b),
- former des points de contact d'une part entre les fibres (16b) de la seconde couche et le dispositif lumineux (15), et d'autre part entre les fibres (16b) de la seconde couche et les fibres (16a) de la première couche,
- faire sécher la résine de sorte que les points de contact créent des points d'adhérence adaptés pour empêcher le dispositif lumineux (15) de se décrocher lors de l'utilisation de l'objet.

## Description

### Domaine technique de l'invention.

L'invention a pour objet un procédé de fabrication d'un objet lumineux surfacique ou volumique.

Elle concerne le domaine technique du luminaire et plus précisément du façonnage d'objets lumineux en deux dimensions (2D) ou en trois dimensions (3D) fabriqués à partir de faisceaux de fibres enrobées et amalgamées par de la résine.

### État de la technique.

On connaît des luminaires constitués de structures rigides sur lesquelles sont fixés des dispositifs lumineux. On connaît, en outre, des structures réalisées grâce à des fibres naturelles enrobées de résine. Le procédé de fabrication permettant de former ces structures 2D ou 3D est par exemple décrit dans le brevet DE 10.2005.060.554 (MASSON WAWER). Ce document décrit une technique de fabrication utilisant des brins de fibres enrobés de résine pour fabriquer des meubles, des ustensiles, des séparateurs d'espaces, des accessoires, des décorations murales, des pavillons et objets similaires de forme volumique ou surfacique, destinés à des espaces intérieurs ou extérieurs. Plusieurs brins de fibres de verre sont réunis en au moins deux paquets de brins, enrobés dans des bains à immersion séparés contenant de la résine de coloris différents et des pigments décoratifs. Après l'enrobage et l'essuyage par un racloir, les brins sont réunis sous une faible pression en un seul faisceau qui se présente sous la forme d'un cordon de résine qui est armée par des fibres de verre. La transformation de ces faisceaux en structure ornementale de forme surfacique ou volumique se fait de la façon suivante : le faisceau est enroulé sous tension sur un dispositif tendeur en partant d'un point de fixation défini, et en alternant sur des points de renvoi diamétralement opposés, jusqu'à ce que le dessin prévu et l'objet volumique doté de sa structure de maillage ou ornementale soient terminés. Une fois le produit fini, le durcissement définitif de la résine se fait à l'air libre à l'aide d'un courant d'air chaud ou à l'aide du rayonnement de chaleur d'une source de lumière, infrarouge ou UV.

Le procédé de fabrication décrit dans le brevet DE 10.2005.060.554 (MASSON WAWER) n'envisage pas d'associer ces structures à des dispositifs lumineux.

Cependant, plusieurs techniques permettent d'installer des dispositifs lumineux sur de telles structures. Ils peuvent, par exemple, être maintenus sur la structure au moyen d'organes d'attache du type colliers Rilsan. Lorsque le dispositif lumineux se présente sous la forme d'une guirlande souple, ces colliers permettent d'accrocher différents points de la guirlande sur la structure. Ce procédé, en plus d'être long et coûteux en temps et en main d'oeuvre, aboutit à des objets manquant d'esthétisme puisqu'ils possèdent des colliers visibles sur la totalité de leurs structures.

Le document brevet DE 10 2007 018 227 (SCHOTT AG) propose par exemple un support sur lequel des faisceaux de fibres lumineux sont maintenus grâce à des fils tissés sur ledit support. Toutefois, les objets obtenus présentent des problèmes de rigidité et de pérennité. En effet, le tissage des fils peut se détendre et ne pas permettre de maintenir efficacement les faisceaux lumineux en place sur le support.

L'invention vise à remédier à cet état des choses. En particulier, un des objectifs de l'invention est de proposer un procédé permettant de fabriquer des objets lumineux 2D ou 3D à partir de fibres enrobées et amalgamées par de la résine.

En particulier, un objectif de l'invention est de proposer un procédé permettant d'assembler de manière plus simple et plus rapide un dispositif lumineux sur une structure du type décrite dans le brevet DE 10.2005.060.554 (MASSON WAWER).

Un autre objectif de l'invention est de permettre la fabrication d'objets lumineux dont la résistance est améliorée par rapport à ceux obtenus dans le document brevet DE 10 2007 018 227 (SCHOTT AG).

Un objectif supplémentaire de l'invention est de permettre la fabrication d'objets lumineux plus esthétiques que ceux obtenus par les techniques précitées connues de l'art antérieur.

### Divulgation de l'invention.

La solution proposée par l'invention est un procédé de fabrication d'un objet lumineux surfacique ou volumique, lequel objet comprend une structure rigide et un dispositif lumineux, lequel procédé comporte les étapes consistant à :
- enrober des fibres de résine et rassembler lesdites fibres enrobées en au moins un faisceau,
- tisser le faisceau sur un dispositif tendeur de manière à délimiter la structure et sécher la résine pour durcir ladite structure,
- associer le dispositif lumineux et la structure.

Ce procédé est remarquable en ce qu'il comprend en outre les étapes consistant à :
- tisser un faisceau de fibres sur le dispositif tendeur de manière à former une première couche de la structure,
- placer le dispositif lumineux sur cette première couche de fibres,
- tisser un faisceau de fibres sur le dispositif tendeur de manière à former une seconde couche de la structure, lequel second faisceau est tissé au dessus du dispositif lumineux, de sorte que ce dernier soit enserré entre les deux couches de fibres,
- former des points de contact d'une part entre les fibres de la seconde couche et le dispositif lumineux, et d'autre part entre les fibres de la seconde couche et les fibres de la première couche,
- faire sécher la résine de sorte que les points de contact créent des points d'adhérence adaptés pour empêcher le dispositif lumineux de se décrocher lors de l'utilisation de l'objet.

Contrairement aux procédés utilisés à ce jour, le procédé objet de l'invention propose un moyen simple et rapide de fabriquer des objets lumineux 2D ou 3D, tout en améliorant la rigidité, la résistance et l'aspect esthétique du produit final. En effet, ce procédé permet d'éviter l'utilisation d'organes d'attache lors de l'installation du dispositif lumineux, fournissant ainsi un gain de temps considérable. De plus, l'absence de ces organes d'attache peu esthétiques rend l'objet beaucoup plus attrayant pour l'utilisateur final.

D'autres caractéristiques avantageuses de l'invention sont listées ci-dessous. Chacune de ces caractéristiques peut être considérée seule ou en combinaison avec les caractéristiques remarquables définies ci-dessus, lesquelles caractéristiques remarquables ne sont pas indispensables en tant que telles à la résolution des problèmes techniques que les caractéristiques ci-dessous se proposent de résoudre :
- le procédé peut comprendre des étapes consistant à :
   ∘ placer le dispositif lumineux entre les deux couches de fibres non durcies, de manière à ce que les faisceaux des deux dites couches de fibres soient en contact avec ledit dispositif,
   ∘ faire sécher la résine de manière à ce que les points de contact entre le dispositif lumineux et les deux couches de fibres deviennent des points d'adhérence ;
- le dispositif lumineux peut se présenter sous la forme d'une guirlande souple à points lumineux, à bande, en forme de tube lumineux ou à câbles nus vernis ;
- les fibres peuvent être assemblées sous forme de faisceaux contenant au moins deux brins de fibres en suivant les étapes consistant à :
   ∘ enrober de résine les brins en les passant dans un bain d'immersion,
   ∘ essuyer les brins en les faisant passer au travers d'un racloir de manière à forcer la pénétration de la résine jusqu'au coeur des fibres ;
- le tissage du dispositif lumineux peut se faire simultanément à celui de la première couche de fibres ;
- le dispositif tendeur peut être constitué d'un moule et de points de renvoi, lesquels points de renvoi se présentent sous la forme de fiches amovibles ;
- le procédé peut comprendre des étapes consistant à :
   ∘ disposer des points de renvoi supplémentaires sur le moule, lesquels points de renvoi supplémentaires sont décalés par rapport aux points de renvoi pour tisser les faisceaux de fibres,
   ∘ tisser la guirlande sur les points de renvoi supplémentaires ;
- les fibres peuvent être des fibres d'origine inorganique choisies dans la famille suivante : fibres de cristal, fibres de silice, fibres de basalte, fibres de carbone ;
- les fibres peuvent être des fibres d'origine végétale choisies dans la famille suivante : fibres de lin, fibres de chanvre, fibres de coton, fibres de jonc de mer, fibres de coco, fibres de palmier, fibres de rotin, fibres de banane ;
- les fibres peuvent être des fibres d'origine animale choisies dans la famille suivante : fibres de laine, fibres de soie ;
- après avoir associé le dispositif lumineux et la structure, l'objet lumineux formé peut subir un traitement ultérieur choisi dans la famille suivante : peinture, métallisation, chromage.

L'invention concerne aussi un objet lumineux surfacique ou volumique comprenant une structure rigide associée à un dispositif lumineux, laquelle structure rigide est constituée d'au moins un faisceau tissé de fibres enrobées de résine. Cette objet est remarquable en ce que la structure est formée de deux couches de fibres superposées, chaque couche étant constituée d'un faisceau tissé de fibres enrobées de résine et que le dispositif lumineux est enserré entre ces deux couches de fibres, les fibres de la seconde couche formant des points de contact d'une part avec le dispositif lumineux, et d'autre part avec les fibres de la première couche, lesquels points de contact créent, une fois la résine séchée, des points d'adhérence adaptés pour empêcher le dispositif lumineux de se décrocher lors de l'utilisation de l'objet.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 représente un exemple de dispositif tendeur pouvant être utilisé pour mettre en oeuvre l'invention,
- la figure 2a schématise l'étape consistant à tisser une première couche de fibres sur le dispositif tendeur de la figure 1,
- la figure 2b schématise l'étape consistant à tisser un dispositif lumineux se présentant sous la forme d'une guirlande souple,
- la figure 2c schématise l'étape consistant à tisser une deuxième couche de fibres,
- la figure 3a est une vue en coupe selon A-A de la figure 2a,
- la figure 3b est une vue en coupe selon B-B de la figure 2b,
- la figure 3c est une vue en coupe selon C-C de la figure 2c,
- la figure 4 illustre un objet lumineux surfacique obtenu conformément à l'invention,
- la figure 5 est une vue schématique du procédé consistant à enrober les brins de fibres de résine,
- la figure 6a est une vue du dessus d'un dispositif tendeur pouvant être utilisé pour mettre en oeuvre l'invention,
- la figure 6b est une vue du dessus d'un dispositif tendeur pouvant être utilisé pour mettre en oeuvre l'invention.

### Modes préférés de réalisation de l'invention.

Le procédé selon l'invention permet la fabrication d'objets lumineux **10** surfaciques (2D) ou volumiques (3D), et plus particulièrement d'objets lumineux composés d'un support fabriqué à base de fibres naturelles **16a**, **16b**. Il permet de fabriquer des objets résistants pouvant adopter n'importe quelle forme connue de l'Homme du métier en utilisant le maximum de matériaux à faible impact écologique.

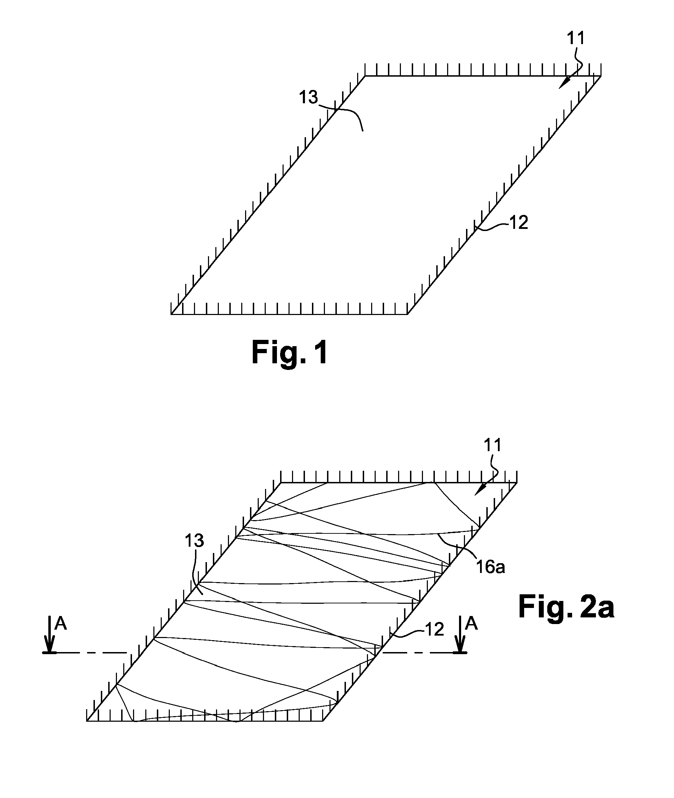

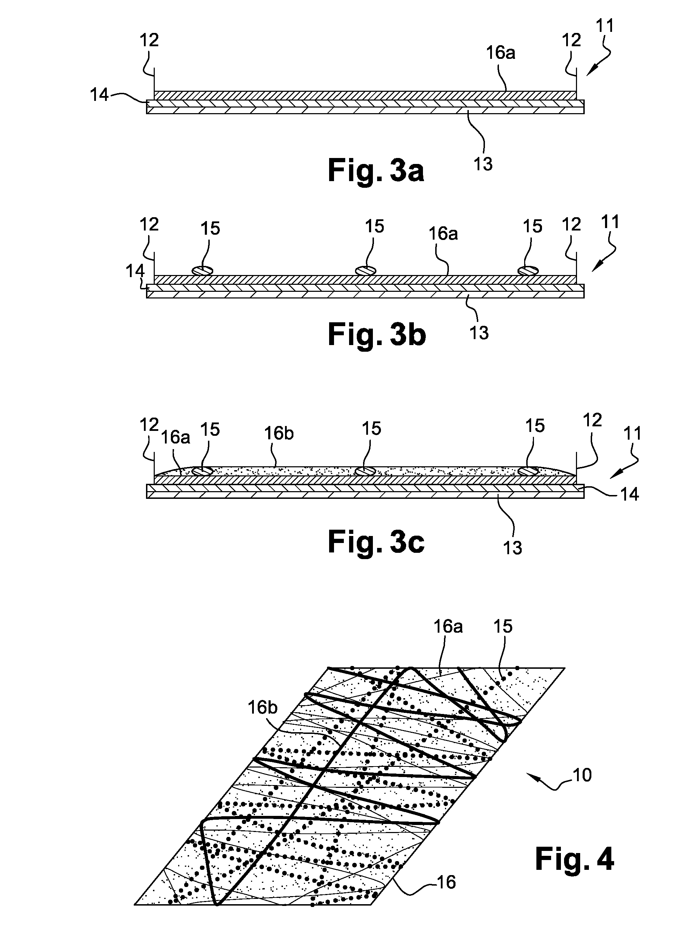

Dans la figure 4, l'objet lumineux **10** se compose d'une structure rigide **16** et d'un dispositif lumineux **15**. La structure rigide **16** peut être en deux dimensions (2D) ou trois dimensions (3D), et se présente sous la forme d'un tissage de fibres naturelles **16a**, **16b** enrobées et amalgamées par de la résine. Elle est formée grâce à un dispositif tendeur **11** permettant de tisser les fibres **16a**, **16b** ainsi que le dispositif lumineux **15** de manière à former la structure 2D ou 3D rigide **16**. La forme du dispositif tendeur **11** peut varier selon l'objet **10** à former. Il peut être en deux dimensions (représenté sur la figure 1), comme par exemple un cercle, un carré, ou un losange, ou en trois dimensions, comme par exemple une sphère, un cylindre ou encore un cube. Le dispositif tendeur **11** possède des points de renvoi **12** qui permettent d'enrouler les fibres **16a**, **16b** et/ou le dispositif lumineux **15** et qui peuvent se trouver sous la forme de fiches amovibles ou fixes.

Le dispositif tendeur **11** est de préférence composé d'un moule **13,** préférentiellement en bois et pouvant être utilisé pour la fabrication de plusieurs formes. Un cercle sera, par exemple, fabriqué grâce à un moule **13** permettant de former deux demi-cercles. Cette caractéristique permet d'économiser sur les coûts de fabrication en effectuant le maximum de formes avec le minimum de moules **13**. Ce moule **13** a une épaisseur d'au moins 2 cm pour permettre de planter efficacement les fiches **12** utilisées pour le tissage. Il peut aussi posséder une surcouche **14** appliquée sur le bois de manière à simplifier le démoulage de la structure rigide **16** après séchage de la résine. Cette surcouche peut être fabriquée dans une matière rigide telle que le polyéthylène, le polypropylène ou encore toute autre matière plastique convenant à l'Homme du métier.

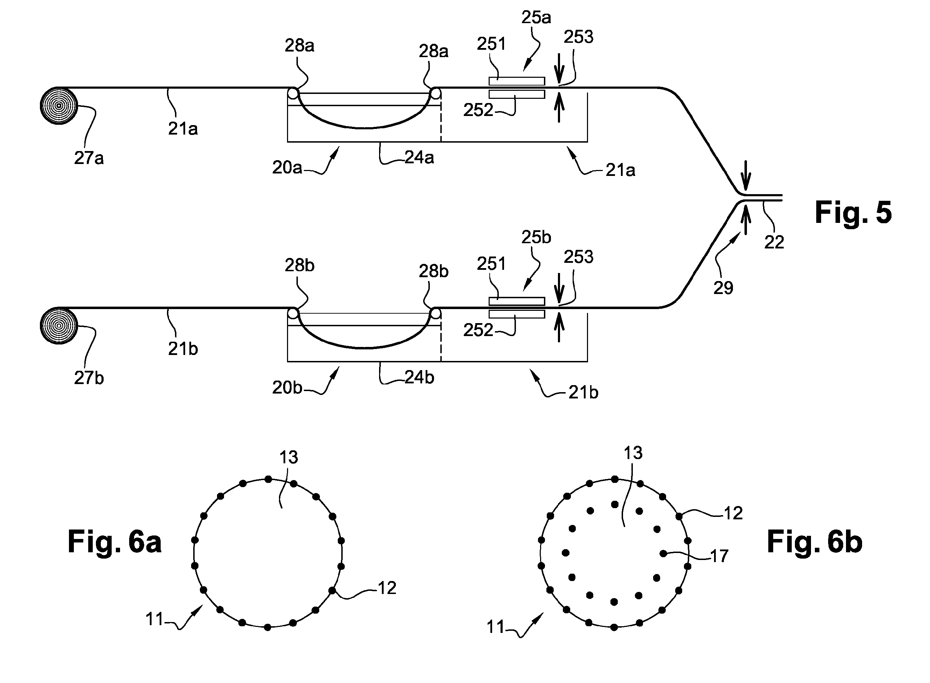

Préalablement au tissage, les fibres **16a**, **16b** sont enrobées et amalgamées par de la résine en utilisant le procédé décrit dans la figure 5. Dans un premier temps, on utilise plusieurs brins **21a**, **21b** de fibres afin de fabriquer un faisceau **22**. Sur la figure 5, deux brins **21a**, **21b** sont utilisés, mais un procédé identique peut être utilisé pour réunir un plus grand nombre de brins. Les fibres **16a**, **16b** peuvent être choisies parmi une multitude de fibres naturelles ou synthétiques comme par exemple des fibres d'origine végétale, des fibres d'origine inorganique ou des fibres d'origine animale. Les fibres d'origine végétale peuvent, par exemple, être des fibres de lin, de chanvre, de coton, de jonc mer, de coco, de palmier, de rotin ou encore de bananier. Les fibres d'origine inorganique peuvent, par exemple, être choisies parmi les fibres de cristal, de silice, de basalte ou encore de carbone. Enfin, les fibres d'origine animale peuvent par exemple être des fibres de laine ou de soie.

Les fibres **16a**, **16b** choisies peuvent être de taille variable permettant ainsi de s'adapter au type d'élément que l'on veut créer. Elles ont une longueur pouvant varier entre 1 m et 5 kms.

L'étape suivante consiste à immerger les fibres **16a**, **16b** dans des bains de résine **24a**, **24b**. Les brins **21a**, **21b** de ces fibres peuvent être imprégnés et enrobés de résine en utilisant un seul bain **24a, 24b** si une seule couleur est désirée. Suivant les décors souhaités, ils peuvent cependant être imprégnés de résine de couleurs différentes. Sur la figure 5, deux brins **21a, 21b** sont représentés. Un brin **21a** peut aller par exemple dans un bain de résine **24a** de couleur marron pendant que le deuxième brin **21b** est baigné dans un bain de résine 2**4b** blanche. Toutefois les brins **21a, 21b** peuvent aussi être regroupés en un faisceau **22** avant que celui-ci ne soit immergé dans la résine (mode non représenté sur la figure 5). Le faisceau **22** est alors passé dans le bain de résine **24a, 24b** de la même manière que dans la technique décrite précédemment.

Avant la phase d'immersion, les brins **21a, 21b** peuvent être enroulés pour éviter leur enchevêtrement. Ils peuvent être enroulés simplement, en utilisant un rouleau **27a, 27b** ou tout autre système de fourniture. Ce système peut être équipé d'un dispositif permettant de régler la vitesse d'amenée des brins **21a**, **21b** et donc la durée qu'ils passeront au poste d'immersion **20a, 20b**.

Les bains d'immersion **24a**, **24b** peuvent être de simples bacs en aluminium, en plastique ou autre matériau rigide. Ils peuvent cependant être sous la forme de dispositifs **20a**, **20b** plus complexes comportant des moyens tels que des poulies **28a**, **28b** ou des treuils permettant de faire avancer le brin **21a**, **21b** à une vitesse donnée. Ce dispositif **20a**, **20b** permet d'obtenir des brins **21a**, **21b** imprégnés et enrobés de résine de manière uniforme et constante.

L'étape d'immersion des fibres **16a**, **16b** par la résine ne nécessite pas de durée spécifique mais a préférentiellement une durée inférieure à 5 minutes et comprise entre 1 et 20 secondes.

Les bains de résine **24a**, **24b** peuvent aussi être équipés de régulateurs de température permettant de conserver la température constante. Cette fonctionnalité permet de garder la viscosité de la résine constante et donc de permettre une imprégnation et un enrobage plus uniformes. Ils peuvent, par exemple, être maintenus à une température supérieure à 35°C. Cela permet de diminuer la viscosité des résines et ainsi de favoriser leur absorption par les fibres **21a**, **21b** lors de leur passage au poste d'immersion.

Deux phénomènes distincts se produisent lors du passage au poste d'immersion : l'imprégnation et l'enrobage. Alors que la phase d'imprégnation consiste à remplir de résine les pores présents dans les fibres, la phase d'enrobage est similaire à l'état de la technique en ce qu'elle consiste seulement à obtenir une couche de résine plus ou moins fine sur la partie extérieure de la fibre.

L'étape suivante consiste en un essuyage de chaque brin **21a**, **21b** après son passage dans le bain de résine **24a**, **24b**. Elle consiste à enlever le surplus de résine présent sur les brins **21a**, **21b** (figure 5) ou sur les faisceaux **22** (non représenté sur la figure 5) à leur sortie du bain **24a**, **24b**. Le moyen **25a**, **25b** utilisé lors de cette étape peut se présenter sous des formes variées. Il peut s'agir d'un racloir venant enserrer le brin **21a**, **21b** et ainsi enlever le surplus de résine ou de toute autre technique différente, comme un moyen d'essuyage du type cylindre dans lequel se trouve un matériau souple permettant d'essuyer l'excès de résine lorsque le brin **21a**, **21b** ou le faisceau **22** est passé dans la partie creuse dudit cylindre, ladite partie creuse ayant un diamètre similaire à celui du brin. De la même manière, le racloir peut aussi être constitué d'une plaque comportant un trou conique dans lequel vient s'insérer le brin **21a**, **21b** ou le faisceau **22** à essuyer.

En plus d'éviter l'excès de résine et ainsi de servir de mesure de calibrage pour l'enrobage des fibres **16a**, **16b**, l'étape d'essuyage permet aussi d'optimiser les quantités de résine utilisées en redéposant l'excédent dans le bain pour qu'elle puisse être réutilisée. La résine peut directement retomber dans le poste d'immersion **20a**, **20b**, ou on peut avoir un bac différent correspondant au poste de récupération **21a**, **21b**. Dans ce cas, un filtre permettant de retirer les impuretés de la résine peut exister entre le poste de récupération **21a**, **21b** et le poste d'immersion **20a**, **20b**.

En outre, le passage par le poste d'essuyage **25a**, **25b** permet d'améliorer l'efficacité de la phase d'imprégnation en forçant la pénétration de la résine jusqu'au coeur des fibres **16a**, **16b**.

Si les brins **21a**, **21b** n'ont pas été réunis en un faisceau unique **22** avant l'étape d'immersion, il convient de les réunir à leur sortie du bain de résine **24a**, **24b**. Une fois sortis des bains de résine **24a**, **24b** et essuyés, comme expliqué précédemment, ils sont regroupés en faisceaux **22** grâce à une faible pression opérée par un poste de groupage **29**. Ce poste de groupage **29** peut être un opérateur exerçant manuellement la pression mais également un dispositif **29** automatique permettant d'exercer une pression constante à la sortie des bains de résine **24a, 24b.** Ce dispositif **29** peut par exemple, être sous la forme de deux plaques **251, 252** parallèles exerçant des mouvements verticaux opposés consistant à les rapprocher l'une de l'autre. De la même manière que pour le cylindre décrit précédemment, la distance **253** entre les deux plaques **251, 252** doit être similaire ou inférieure au diamètre du brin **21a, 21b** de manière à ce qu'une pression puisse être exercée. Lors de cette étape, la présence de résine va permettre aux brins **21a, 21b** de rester collés les uns aux autres et ainsi donner l'effet décoratif souhaité.

Les figures 2a et 3a montrent le résultat obtenu après le tissage de la première couche de fibres **16a** après qu'elles aient été enrobées de résine. Pour cela, le faisceau **22** de fibres **16a** est d'abord enroulé sur un des points **12** du dispositif tendeur **11**. Il est ensuite renvoyé sur un autre point **12** tout en appliquant une tension de traction régulière et constante. Cette étape est répétée successivement sur plusieurs points de renvoi **12** diamétralement opposés. L'ordre de succession des points de renvoi **12** peut être varié et dépend du décor choisi ainsi que de l'effet esthétique désiré. Préférentiellement, les fibres **16a** sont tissées kilogramme par kilogramme pour éviter que la résine ne sèche avant d'avoir fini de les tisser.

Le temps de séchage de la résine peut varier de 15 à 75 minutes suivant sa composition et/ou la température. La composition varie selon l'utilisation et l'effet désiré. La résine peut se présenter sous la forme d'une résine époxy, un polyester, un polymère durcissable ou encore toute autre forme connue de l'Homme du métier. Elle peut aussi contenir des additifs comme par exemple du cobalt ou encore des peroxydes permettant d'améliorer le durcissement de la résine. Tous autres additifs connus de l'Homme du métier et permettant d'améliorer les performances de la résine pourront être utilisés.

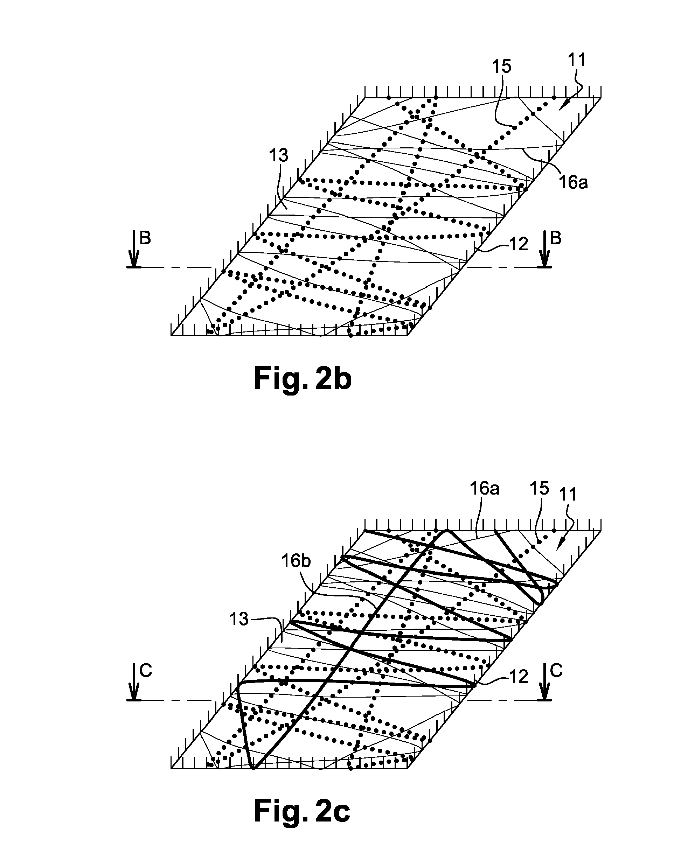

Les figures 2b et 3b montrent la structure **16** après tissage du dispositif lumineux **15.** Ces dispositifs **15** peuvent se présenter sous la forme de guirlandes électriques à points lumineux, pouvant, par exemple, être en caoutchouc, en PVC, en métal vernis ou en silicone. Toutefois, ils peuvent aussi se présenter sous la forme de guirlandes à bandes, de tubes lumineux ou encore de guirlandes à câbles nus vernis. Le choix du dispositif lumineux **15** se fait en fonction de la taille de l'objet **10** désiré ainsi que de l'effet lumineux souhaité. Sa longueur varie en fonction de la taille de l'objet **10** et est par exemple comprise entre 50 cm et 10 m. Le dispositif lumineux **15** possède un connecteur permettant de le relier à une alimentation. Cette alimentation peut se présenter sous des formes variées telles qu'une prise électrique, une batterie, un générateur, ou encore toute autre technique connue de l'Homme du métier.

Le tissage du dispositif lumineux **15** peut se faire indépendamment du tissage des fibres **16a** décrit préalablement, mais peut aussi se superposer aux brins constituant la première couche de fibres **16a.** Un mode de réalisation consiste à associer le dispositif **15** au faisceau de fibres **16a** à sa sortie de l'étape d'essuyage. Cette caractéristique permet un gain de temps au niveau du procédé de fabrication, et donc permet de diminuer le prix de revient des structures **16**.

Le tissage du dispositif lumineux **15** peut s'effectuer en utilisant les mêmes points de renvoi **12** que ceux utilisés préalablement pour le tissage des brins de fibres **16a** en utilisant un dispositif tendeur **11** tel que celui représenté dans la figure 6a. Toutefois, des points de renvoi différents **17**, légèrement décalés par rapport aux précédents **12**, peuvent être utilisés, comme le montre la figure 6b. Cette configuration est, par exemple, utilisée dans le cas où le dispositif **15** choisi est une guirlande à gros câble, comme par exemple dans le cas de câbles ayant des diamètres supérieurs à 5 mm. Ces points de renvoi **17** évitent l'encombrement des points de renvoi **12** lors du tissage du dispositif lumineux **15**, et permettent ainsi d'obtenir des objets **10** plus esthétiques.

De manière similaire à la première couche de fibres **16a**, une deuxième couche de fibres **16b** est tissée de façon à enserrer le dispositif lumineux **15** et à éviter que celui-ci ne se décroche de la structure **16** lors de son utilisation (figures 2c et 3c). Les fibres **16b** de la seconde couche choisies sont similaires à celles **16a** décrites précédemment et ont également une longueur pouvant varier de 1 m à 5 kms. Préalablement au tissage, elles ont subit le même procédé d'enrobage que celui décrit précédemment (figure 5). Dans un mode de réalisation, la couche de fibres **16b** peut être fabriquée à l'aide du même faisceau **22** de fibres que celui utilisé préalablement pour former la première couche de fibres **16a**.

La figure 3c montre les différentes couches qui composent l'objet lumineux **10** après toutes les étapes de tissage. La deuxième couche de fibres **16b** vient enserrer le dispositif lumineux **15** pour former des points de contact. Les fibres **16b** forment ces points de contact aussi bien avec le dispositif lumineux **15** qu'avec la première couche de fibres **16a**. Ils permettent, une fois la résine séchée, de créer des points d'adhérence qui vont empêcher le dispositif lumineux **15** de se décrocher lors de l'utilisation de l'objet **10**. Cette caractéristique permet de ne pas avoir à utiliser des organes d'attache tels que des colliers Rilsan lors de l'installation du dispositif lumineux **15**.

La figure 4 montre l'objet **10** après séchage de la résine. Le dispositif tendeur **11** est alors retiré pour obtenir l'objet **10** uniquement composé de la structure rigide **16** et du dispositif lumineux **15**. Après séchage de la résine, la structure **16** est suffisamment rigide pour ne plus nécessiter de moule **13**. Les fiches amovibles **12** sont alors retirées du dispositif tendeur **11** de manière à pouvoir démouler l'objet lumineux **10**.

L'objet lumineux **10** de la figure 4 peut subir des traitements ultérieurs de manière à améliorer son aspect extérieur. Des procédés différents peuvent être utilisés de manière à obtenir l'effet souhaité. Il peut donc être peint, mais peut aussi subir un traitement plus complexe tel qu'une métallisation ou encore un chromage. La métallisation peut, par exemple, consister à un procédé de précipitation d'argent effectué à partir d'une solution de nitrate d'argent. Toutefois, toute autre technique connue de l'Homme du métier peut être considérée.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- le dispositif tendeur **11** utilisé peut se présenter sous des formes et/ou des tailles variées,
- le dispositif tendeur **11** peut être fabriqué dans des matériaux variés,
- les fibres **16a**, **16b** utilisées peuvent être naturelles ou synthétiques,
- la résine peut se présenter sous différentes formes et/ou couleurs et/ou compositions,
- le nombre de brins de fibres **16a**, **16b** composant un faisceau **22** peut varier, celui-ci est constitué d'au moins un brin mais peut en contenir un plus grand nombre,
- la structure **16** peut être formée à partir de deux faisceaux **22**, chacun permettant de former une des deux couches de fibres **16a**, **16b** ; la structure **16** peut aussi être formée à partir d'un seul faisceau **22** permettant de former les deux couches de fibres **16a**, **16b** de la structure **16**,
- le dispositif lumineux **15** peut se présenter sous la forme d'une guirlande souple ou d'éléments rigides,
- l'objet lumineux **10** peut subir des traitements ultérieurs variés,
- la durée du passage au poste d'immersion **20a**, **20b** peut varier,
- le dispositif utilisé dans le poste d'essuyage **25a**, **25b** peut se présenter sous différentes formes,
- la technique utilisée peut posséder ou non un poste de récupération **21a**, **21b** de la résine,
- le dispositif lumineux **15** peut être relié à différents types d'alimentation électrique.

## Revendications

**1.** Procédé de fabrication d'un objet lumineux surfacique ou volumique, lequel objet comprend une structure rigide (16) et un dispositif lumineux (15), lequel procédé comporte les étapes consistant à :
- enrober des fibres (21 a, 21 b) de résine et rassembler lesdites fibres (21 a, 21b) enrobées en au moins un faisceau (22),
- tisser le faisceau (22) sur un dispositif tendeur (11) de manière à délimiter la structure (16) et sécher la résine pour durcir ladite structure (16),
- associer le dispositif lumineux (15) et la structure (16),
et **se caractérisant par le fait que** ledit procédé comprend en outre les étapes consistant à :
- tisser un faisceau (22) de fibres (16a) sur le dispositif tendeur (11) de manière à former une première couche de la structure (16),
- placer le dispositif lumineux (15) sur cette première couche de fibres (16a),
- tisser un faisceau (22) de fibres (16b) sur le dispositif tendeur (11) de manière à former une seconde couche de la structure (16), lequel second faisceau (22) est tissé au dessus du dispositif lumineux (15), de sorte que ce dernier soit enserré entre les deux couches de fibres (16a, 16b)
- former des points de contact d'une part entre les fibres (16b) de la seconde couche et le dispositif lumineux (15), et d'autre part entre les fibres (16b) de la seconde couche et les fibres (16a) de la première couche,
- faire sécher la résine de sorte que les points de contact créent des points d'adhérence adaptés pour empêcher le dispositif lumineux (15) de se décrocher lors de l'utilisation de l'objet.

**1.** Procédé selon la revendication 1, comprenant les étapes consistant à :
- placer le dispositif lumineux (15) entre les deux couches de fibres (16a, 16b) non durcies, de manière à ce que les faisceaux (22) des deux dites couches de fibres (16a, 16b) soient en contact avec ledit dispositif (15),
- faire sécher la résine de manière à ce que les points de contact entre le dispositif lumineux (15) et les deux couches de fibres (16a, 16b) deviennent des points d'adhérence.

**2.** Procédé selon l'une des revendications 1 ou 2, consistant à utiliser un dispositif lumineux (15) se présentant sous la forme d'une guirlande souple à points lumineux, à bande, en forme de tube lumineux ou à câbles nus vernis.

**3.** Procédé selon l'une des revendications 1 à 3, dans lequel les fibres (16a, 16b) sont assemblées sous forme de faisceaux (22) contenant au moins deux brins (21a, 21b) de fibres en suivant les étapes consistant à :
- enrober de résine les brins (21a, 21 b) en les passant dans un bain d'immersion (24a, 24b),
- essuyer les brins (21a, 21b) en les faisant passer au travers d'un racloir (25a, 25b) de manière à forcer la pénétration de la résine jusqu'au coeur des fibres.

**4.** Procédé selon l'une des revendications 3 ou 4, dans lequel le tissage du dispositif lumineux (15) se fait simultanément à celui de la première couche de fibres (16a).

**5.** Procédé selon l'une des revendications 1 à 5 dans lequel le dispositif tendeur (11) est constitué d'un moule (13) et de points de renvoi (12), lesquels points de renvoi (12) se présentent sous la forme de fiches amovibles.

**6.** Procédé selon la revendication 6 combinée à la revendication 3, dans lequel :
- des points de renvoi supplémentaires (17) sont disposés sur le moule (13), lesquels points de renvoi supplémentaires (17) sont décalés par rapport aux points de renvoi (12) pour tisser les faisceaux de fibres (16a, 16b),
- la guirlande (15) est tissée sur les points de renvoi supplémentaires (17).

**7.** Procédé selon l'une des revendications 1 à 7, dans lequel les fibres (16a, 16b) sont des fibres d'origine inorganique choisies dans la famille suivante : fibres de cristal, fibres de silice, fibres de basalte, fibres de carbone.

**8.** Procédé selon l'une des revendications 1 à 7, dans lequel les fibres (16a, 16b) sont des fibres d'origine végétale choisies dans la famille suivante : fibres de lin, fibres de chanvre, fibres de coton, fibres de jonc de mer, fibres de coco, fibres de palmier, fibres de rotin, fibres de banane.

**9.** Procédé selon l'une des revendications 1 à 7, dans lequel les fibres (16a, 16b) sont des fibres d'origine animale choisies dans la famille suivante : fibres de laine, fibres de soie.

**10.** Procédé selon l'une des revendications 1 à 10, dans lequel, après avoir associé le dispositif lumineux (15) et la structure (16), l'objet lumineux (10) formé subit un traitement ultérieur choisi dans la famille suivante : peinture, métallisation, chromage.

**11.** Objet lumineux surfacique ou volumique comprenant une structure rigide (16) associée à un dispositif lumineux (15), laquelle structure rigide (16) est constituée d'au moins un faisceau (22) tissé de fibres enrobées de résine, **caractérisé en ce que** :
- la structure (16) est formée de deux couches de fibres superposées (16a, 16b), chaque couche (16a, 16b) étant constituée d'un faisceau (22) tissé de fibres enrobées de résine,
- le dispositif lumineux (15) est enserré entre ces deux couches de fibres (16a, 16b),
- les fibres (16b) de la seconde couche forment des points de contact d'une part avec le dispositif lumineux (15), et d'autre part avec les fibres (16a) de la première couche, lesquels points de contact créent, une fois la résine séchée, des points d'adhérence adaptés pour empêcher le dispositif lumineux (15) de se décrocher lors de l'utilisation de l'objet
